(19) Europäisches Patentamt
European Patent Office
Office européen des brevets

(11) EP 2 064 074 B1

(12) FASCICULE DE BREVET EUROPEEN

(45) Date de publication et mention
de la délivrance du brevet:
**07.07.2010 Bulletin 2010/27**

(21) Numéro de dépôt: **07765965.4**

(22) Date de dépôt: **30.05.2007**

(51) Int Cl.:
***B60C 19/12*** *(2006.01)*

(86) Numéro de dépôt international:
**PCT/FR2007/000891**

(87) Numéro de publication internationale:
**WO 2007/138189 (06.12.2007 Gazette 2007/49)**

(54) **ENCEINTE SOUPLE ANTIPERFORATION**

PANNENSICHERER, FLEXIBLER INNENSCHLAUCH

PUNCTURE-RESISTANT FLEXIBLE INNER TUBE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **30.05.2006 FR 0604790**

(43) Date de publication de la demande:
**03.06.2009 Bulletin 2009/23**

(73) Titulaire: **Boulain, Robert Georges Pierre
83400 Hyères L'Ayguade (FR)**

(72) Inventeur: **Boulain, Robert Georges Pierre
83400 Hyères L'Ayguade (FR)**

(56) Documents cités:
**EP-A1- 1 174 290      DE-U1- 20 004 648
US-A- 1 767 502       US-A1- 2006 054 261**

## Description

La présente invention concerne le domaine des enceintes souples étanches destinées à résister à la perforation.

Dans le domaine des pneumatiques de véhicules, le document W00218158 décrit une barrière antiperforation positionnée entre la bande de roulement et l'armature textile de l'enveloppe. La barrière antiperforation fonctionne comme un rempart de protection contre un objet pénétrant ou choquant et est capable de résister jusqu'à la limite de sa résistance à la rupture. Le positionnement à cet endroit de l'architecture du pneumatique et son adhésion aux couches environnantes le maintiennent en position. Cette barrière apporte une protection légèrement améliorée seulement contre des agressions de faible amplitude de déformation, ce qui s'avère insuffisant pour empêcher la plupart des perforations.

Egalement dans le domaine des pneumatiques pour véhicules, on connaît les systèmes visant à conserver une certaine capacité de roulement après la crevaison, par exemple au moyen de liquide auto-obturant mais qui ne peuvent fonctionner que pour des perforations de faibles dimensions.

Un dispositif complexe constitué d'une structure semi-rigide, fixée à la roue et prévue pour supporter le pneumatique perforé et affaissé pour maintenir une hauteur minimale de l'enceinte pneumatique peut être insérée dans l'enceinte pneumatique et permettre au véhicule de rejoindre à une vitesse limitée à environ 80 km/h un point de dépannage censé être équipé du matériel spécial pour démonter et réparer ce type de pneumatique connu sous le nom « Pax System », ce qui est relativement rare. Le point de dépannage ne doit pas être situé à une distance supérieure à environ 100 km. De tels dispositifs ont notamment comme inconvénient la dégradation irrémédiable du pneumatique si le roulage en mode affaissé se prolonge. Par ailleurs, ces dispositifs nécessitent un contrôle permanent de la pression effective de chacun des pneumatiques par des moyens électroniques appropriés. Ces dispositifs apportent donc une masse et un coût supplémentaire importants et une fiabilité limitée en raison de défauts de fonctionnement des circuits et des capteurs de pression des pneumatiques. Enfin, on a constaté l'apparition, à partir de vitesses de l'ordre de 130 km/h, de vibrations récurrentes rendant très difficile et inconfortable la conduite des véhicules équipés d'un tel dispositif et provoquant des réclamations des utilisateurs auprès des constructeurs des véhicules qui en sont équipés. Ces dispositifs ne réduisent pas le risque de crevaison.

Le document U S 5 785 779 propose de disposer entre la face interne du pneumatique sous sa bande de roulement et la chambre à air un ruban anti-crevaison constitué d'une bande de matériau synthétique. Lorsqu'un objet pointu traverse la bande de roulement, le ruban anti-crevaison joue le rôle d'une barrière de protection de la chambre à air qui peut être efficace contre des petits objets pointus de faibles dimensions tels que des épines, dans la mesure où le ruban anti-crevaison a été positionné correctement et est resté en place. Le ruban anti-crevaison réduit le rendement du pneumatique et est également à l'origine d'une abrasion interne relativement fréquente. Les rubans anti-crevaison s'appliquent plutôt dans le domaine des pneumatiques de bicyclettes.

Le document E P - A - 1 174 290, qui est considéré comme étant l'état de la technique le plus proche de l'objet de la revendication 1, montre toutes les caractéristiques du préambule de cette revendication.

La présente invention vise à remédier aux inconvénients évoqués ci-dessus.

La présente invention vise à proposer une enceinte souple équipée de moyens anti-crevaison améliorés adaptés aux nombreuses applications des enceintes souples.

La présente invention vise à apporter des capacités anti-crevaison améliorées aux pneumatiques de véhicules, aux réservoirs souples, aux bateaux pneumatiques, etc.

La présente invention vise à apporter une protection anti-crevaison efficace, polyvalente en fonction du risque de perforation rencontré dans l'application considérée.

Selon un aspect de l'invention, une enceinte souple comprend une bande de travail et des flancs, définissant une enveloppe. L'enceinte souple comprend une membrane d'étanchéité tapissant au moins en partie l'enveloppe, la membrane d'étanchéité comprenant un matériau élastique et une armature anti-perforation, la membrane d'étanchéité étant libre par rapport à la bande de travail et fixée aux extrémités opposées à la bande de travail.

En cas de perforation de l'enveloppe au droit de la membrane d'étanchéité, la membrane d'étanchéité est capable de se déplacer à l'intérieur de l'enceinte souple en épousant au moins en partie la forme du corps étranger ayant perforé l'enveloppe, réduisant ainsi le risque de perforation de l'enceinte souple. La membrane d'étanchéité est capable de s'écarter de la bande de travail tout en absorbant de l'énergie.

Dans un mode de réalisation, la membrane d'étanchéité est fixée à au moins une partie des flancs. L'enceinte peut former un élément gonflable, par exemple de bateau pneumatique. La membrane d'étanchéité est étanche aux fluides, gaz et/ou liquides.

Dans un mode de réalisation, l'enceinte comprend des talons délimitant des flancs, la membrane d'étanchéité étant fixée à au moins une partie des talons.

Dans un mode de réalisation, la membrane d'étanchéité est libre par rapport à au moins un flanc. L'enceinte peut former un pneumatique de véhicule.

Dans un pneumatique de véhicule, la membrane d'étanchéité peut être fixée aux talons et libre par rapport aux flancs et à la bande de roulement pour protéger les flancs et la bande de roulement. La membrane d'étanchéité peut être fixée aux flancs et libre par rapport à la bande de roulement pour protéger la bande de roulement. La membrane d'étanchéité peut être fixée aux talons et à la bande de roulement et libre par rapport aux flancs pour protéger les flancs.

Alternativement, l'enceinte peut former un réservoir de forme rectangulaire ou en forme de rouleau. Dans un réservoir de forme rectangulaire, la membrane d'étanchéité peut être fixée à proximité de la base et du sommet et libre par rapport aux flancs formant bande de travail exposée aux projectiles pour protéger lesdits flancs. Dans un réservoir en forme de rouleau, la membrane d étanchéité peut être fixée aux extrémités du cylindre et libre par rapport à la surface de révolution formant bande de travail, et le cas échéant de roulement, exposée aux projectiles et aux objets tranchants pour protéger la surface de révolution.

Dans un mode de réalisation, la longueur développée de la méridienne de la membrane d'étanchéité est supérieure à celle de la méridienne de l'enceinte souple. On favorise le déplacement de la membrane d'étanchéité sous l'effet d'un corps étranger ayant perforé l'enveloppe.

De préférence, la longueur développée de la méridienne de la membrane d'étanchéité est supérieure d'environ 10 cm à celle de la méridienne de l'enceinte. Dans un pneumatique de véhicule prévu pour une vitesse de rotation lente, par exemple un pneumatique pour poids lourds, engins agricoles ou véhicules blindés à roues, la longueur développée de la méridienne de la membrane d'étanchéité peut être supérieure d'environ 15 cm à celle de la méridienne de l'enceinte, la masse supplémentaire étant faible par rapport à la masse totale du pneumatique.

Dans un mode de réalisation, l'enceinte souple comprend une membrane d'étanchéité supplémentaire tapissant au moins en partie l'intérieur de la première membrane d'étanchéité, la membrane d'étanchéité supplémentaire comprenant un matériau élastique et une armature anti-perforation, la membrane d'étanchéité supplémentaire étant au moins en partie libre par rapport à la première membrane d'étanchéité et fixée aux extrémités opposées à la bande de roulement. Le risque de perforation est encore réduit.

Dans un pneumatique de véhicule prévu pour une vitesse de rotation lente, par exemple un pneumatique pour poids lourds, engins agricoles ou véhicules blindés, deux ou trois membranes d'étanchéité supplémentaires peuvent être prévues dans le cas des poids lourds et des engins agricoles et jusqu'à vingt à trente dans le cas des véhicules blindés, la masse supplémentaire étant faible par rapport à la masse totale du pneumatique.

Dans un mode de réalisation, l'enceinte souple comprend une pluralité de billes disposées en lit entre la bande de travail et la membrane d'étanchéité. On favorise le déplacement relatif de la membrane d'étanchéité par rapport à la bande de travail par rotation des billes. Le frottement de la membrane d'étanchéité par rapport à la bande de travail est réduit d'où une réduction du risque de perforation de la membrane d'étanchéité.

Les billes peuvent présenter un diamètre compris entre 0,2 et 3 mm. Les billes peuvent comprendre du verre ou de la céramique par exemple de type Zirmil® de la société SEPR.

Dans un mode de réalisation, les billes sont lubrifiées. Le lubrifiant peut comprendre du bisulfure de molybdène, du graphite, du silicone, du talc, du PTFE, etc.

Dans un mode de réalisation, la membrane d'étanchéité comprend un élastomère, de préférence de l'halobutyl.

Dans un mode de réalisation, la membrane d'étanchéité comprend au moins un matériau d'adhésion de l'armature anti-perforation sur le matériau élastique.

Dans un mode de réalisation, le matériau élastique couvre au moins une des faces de l'armature anti-perforation.

La membrane d'étanchéité peut comprendre un caoutchouc butyl et/ou halobutyl, un nitrile, un nitrile halogéné, un polychloroprène, un polyéthylène chlorosulfoné par exemple de l'Hypalon®, un caoutchouc de styrène butadiène (SBR), un silicone, un élastomère fluorocarboné, par exemple du Vison®, un caoutchouc éthylène propylène diène monomère (EPDM), etc. selon l'application envisagée afin de constituer une barrière efficace et durable aux fluides gazeux ou liquides, ladite membrane tapissant l'ensemble de l'intérieur de l'enceinte ou non.

L'armature anti-perforation de la membrane d'étanchéité peut être de type textile à haute résistance et/ou non tissée, à base de fibres à haute ténacité telles que des fibres aramides, notamment para-aramides, par exemple du Kevlar®, ou méta-aramides, par exemple du Nomex®, en polyéthylène à très haut poids moléculaire, par exemple du Dyneema® ou du Spectre®, en polymère liquide cristal par exemple du Vectran®, en verre, en polyamide, en polyester, en coton, etc. ou équivalents ou encore d'un mélange d'entre elles en fonction des températures minimales et maximales d'utilisation, de la résistance aux flexions répétées à fréquence élevée, de la pression, etc.

L'armature peut également comprendre ou encore être doublée par des matériaux de type polyuréthane à résistance à la perforation nettement supérieure à celle du matériau élastique de la membrane d'étanchéité.

Dans un mode de réalisation, l'armature anti-perforation est traitée selon une technique d'adhérisation pour pouvoir être liée ultérieurement fortement et le plus intimement possible avec le matériau élastique, l'adhésion entre l'armature anti-perforation et le matériau élastique étant la plus élevée possible afin de constituer une membrane d'étanchéité composite armée et néanmoins souple et de cohésion élevée.

Dans un mode de réalisation, l'armature anti-perforation est recouverte sur au moins une face par le matériau élastique, en particulier la face en contact avec l'intérieur de l'enveloppe dans le but de présenter un aspect de finition le plus lisse possible.

Dans le cas de pneumatiques pour véhicules civils, la membrane d'étanchéité peut être libre par rapport à la bande de roulement et peut être fixée aux talons et/ou aux flancs du pneumatique, les perforations survenant le plus souvent à travers la bande de roulement. Dans le cas de véhicules militaires ou agricoles, la membrane d'étanchéité sera libre par rapport aux flancs du pneumatique et pourra être fixée sur les talons et/ou sur l'intérieur de la bande de roulement, les crevaisons survenant souvent par perforation des flancs par projectile balistique dans le cas des véhicules militaires ou encore par des pierres ou des bois pointus dans le cas des véhicules agricoles. Dans les deux cas, on peut prévoir un pneumatique dont la membrane d'étanchéité est liée aux talons et reste libre par rapport aux flancs et à la bande de roulement.

Le fait de prévoir une pluralité de membranes d'étanchéité présentant la longueur méridienne la plus élevée possible permet d'augmenter la probabilité d'un décalage des trous des membranes d'étanchéité après crevaison, permettant de conserver une certaine étanchéité. Cette caractéristique est particulièrement intéressante dans le cas des pneumatiques à usage militaire. Dans le cas de deux membranes d'étanchéité ayant subi une perforation, le trou de la première membrane d'étanchéité peut se décaler circonférentiellement ou latéralement par rapport au trou du flanc du pneumatique et le trou de la deuxième membrane d'étanchéité peut également se décaler par rapport au trou de la première membrane d'étanchéité. On accroît ainsi substantiellement la probabilité de conservation d'un gonflage correct du pneu malgré une perforation par projectile.

Bien entendu, dans le cas d'une pluralité de membranes d'étanchéité, la probabilité est élevée qu'un projectile soit arrêté par l'une des membranes d'étanchéité successives et qu'aucune perforation complète ne survienne. Le pneumatique conserve alors son gonflage d'origine. Ce phénomène peut également se produire dans le cas de perforation d'un réservoir souple de type réservoir de véhicule ou encore de réservoir à grande capacité destiné au ravitaillement en eau ou en carburant.

Ainsi, lorsqu'un projectile ayant une énergie cinétique particulièrement élevée réussit à perforer la paroi de l'enceinte elle-même puis parvient à la première membrane d'étanchéité armée, le projectile provoque la distension de ladite membrane du fait de sa non-adhérence à la paroi interne de l'enveloppe et peut réussir à la perforer si son énergie cinétique est suffisante. Le projectile devra alors encore posséder une énergie cinétique résiduelle suffisante pour distendre la seconde membrane armée et la perforer, voire éventuellement les membranes d'étanchéité suivantes. Les différentes membranes fonctionnent ainsi successivement par amortissement et absorption de l'énergie cinétique du projectile.

De préférence, le dimensionnement de la longueur de la méridienne des membranes d'étanchéité doit aller en augmentant, de la première membrane en contact avec l'intérieur de l'enveloppe jusqu'à la dernière membrane. En outre, il existe une probabilité importante que le projectile balistique soit dévié de sa trajectoire initiale, favorisant ainsi le phénomène de désalignement des éventuelles perforations des membranes perforées et facilitant ainsi un colmatage automatique des perforations. Le nombre et la résistance des membranes d'étanchéité peuvent être prévus pour résister aux projectiles usuels, par exemple de 7,62 mm ou encore de 12,7 mm aux distances de combat usuelles. La déviation effective de la trajectoire du projectile peut être due à la résistance générée par l'association de la force réactive variable, progressive et sensiblement omnidirectionnelle de la pression interne de l'enceinte pneumatique d'une part et, d'autre part, à la résistance des matériaux constitutifs desdites membranes.

Ainsi, si on ajoute à la résistance intrinsèque à la perforation des matériaux constituant les membranes armées, un nombre élevé de membranes et/ou d'armatures anti-perforation, un dimensionnement progressif de la longueur de la méridienne de chacune des membranes d'étanchéité et une alternance des systèmes facilitant les déplacements latéraux des diverses membranes, de manière à créer des différentiels tribologiques de déplacements latéraux des diverses membranes les unes par rapport aux autres, on contribue ainsi à un abaissement de la probabilité d'alignement des perforations successives. A titre d'exemple, on peut prévoir une couche de microsphères dans une interface entre membranes d'étanchéité, un lubrifiant pâteux, par exemple à base de silicone dans une autre interface entre membranes d'étanchéité, et un lubrifiant sec, par exemple du bisulfure de molybdène dans encore une autre interface entre membranes d'étanchéité.

Les billes disposées en lit entre la bande de travail et la membrane d'étanchéité peuvent également être disposées entre deux membranes d'étanchéité. Les billes peuvent comprendre du polyamide-imide, du polyacétal, du polyamide ou équivalent. A titre d'exemple il peut être prévu des billes en céramique dure de type Zirmil® à 93% d'oxyde de zirconium et un diamètre moyen d'un millimètre avec une densité de 5,9. En fonction de la densité de billes choisie, la masse supplémentaire à prévoir est de l'ordre de 5 à 30 grammes/dm2, par exemple 23 grammes par dm2 afin de laisser un certain espace entre les billes.

On peut également utiliser des billes en céramique classique de type ER120 de la société SEPR présentant une densité de 3,8, en Torlon 4275 de la société Solvay Advanced polymers qui est de type polyamide-imide de densité 1,49, en Delrin® de la société Du Pont de Nemours qui est de type polyacétal avec une densité de 1.41 ou encore en nylon de la société Saluc avec une densité de 1,14.

Le lit de billes permet une mobilité latérale maximale de la ou des membranes d'étanchéité armées malgré les contraintes environnantes opposées que constituent d'une part la pression interne de l'enceinte et, d'autre part, la force de pénétration de l'objet perforant ou coupant.

Une partie de l'énergie cinétique de l'objet perforant ou coupant est, au premier stade de la tentative de perforation, absorbée partiellement par la résistance à la pénétration des matériaux constituant la paroi externe de l'enveloppe. Au second stade de la tentative de pénétration, et dans la mesure où l'objet perforant ou coupant traverse la paroi externe de l'enveloppe, ledit objet perforant ou coupant rencontre alors la membrane d'étanchéité qui est libre par rapport à la paroi interne de l'enveloppe. L'adhérence de la membrane d'étanchéité à la paroi interne de l'enveloppe est proportionnelle à la pression interne de l'enceinte et dépend également de la somme des surfaces des calottes sphériques des billes. La présence des billes entre la paroi interne de l'enveloppe et la membrane d'étanchéité armée permet à cette dernière de se déplacer latéralement avec une beaucoup plus grande facilité que si la paroi interne de l'enveloppe et la membrane d'étanchéité étaient en contact direct. Une forme sphérique étant par définition à l'origine de déplacements omnidirectionnels aisés, la résistance au déplacement de la membrane d'étanchéité est réduite pour l'essentiel à une grandeur proportionnelle à la pression interne de l'enceinte.

Le frottement et le glissement liés au déplacement des billes sollicitées par les mouvements latéraux éventuels de la membrane d'étanchéité qu'elles supportent offrent une résistance considérablement moins importante que dans le cas d'un frottement direct et intime entre la paroi interne de l'enveloppe et la membrane d'étanchéité. Grâce à cela, la membrane d'étanchéité armée peut se mouvoir latéralement très facilement et se déformer avec une résistance considérablement diminuée lorsqu'une force perpendiculaire de poussée due à un objet perforant ou coupant tente de perforer l'ensemble. En outre, l'énergie de déplacement est répartie de façon relativement uniforme. Le coefficient de frottement correspondant à celui de l'interface de contact entre les billes et les parois environnantes, notamment de la membrane d'étanchéité et de la paroi interne de l'enveloppe constitue une force de résistance relativement faible qui peut encore être réduite par l'apport d'un lubrifiant. La membrane d'étanchéité armée est donc capable de se déformer très aisément grâce à sa mobilité latérale et ce malgré la pression interne de l'enveloppe.

On admet que :

$$Rm + Rn > Fg + Fr + A ,$$

avec :

Rm : la résistance à la perforation du matériau élastique,

Rn : la résistance à la perforation de l'armature anti-perforation,
Fg : le frottement de glissement,
Fr : le frottement de roulement des billes, et
A : l'adhésion.

Si $E<Rp$, il n'y a pas de perforation de l'enveloppe
Avec :

E : l'énergie cinétique du projectile,
Rp : la résistance à la perforation de l'enveloppe,
Si $E>Rp$, et $E-Rp-PV-Fg-Fr-A<Rm+Rn$, il n'y a pas de perforation des membranes d'étanchéité
Avec : P la pression interne de l'enceinte pneumatique,
n le nombre de membranes d'étanchéité, et
V le volume déplacé à l'intérieur de l'enceinte pneumatique.

Si $E>Rp$, et $E-Rp-PV-Fg-Fr-A<n(Rm+Rn)$, il n'y a pas de perforation complète de l'ensemble des membranes d'étanchéité.

Dans l'hypothèse où un projectile perfore l'ensemble des membranes d'étanchéité, du fait que les membranes d'étanchéité ont une longueur méridienne plus grande que celle de la paroi interne de l'enveloppe, lesdites membranes d'étanchéité subissent un déplacement latéral probable. Il en résulte une certaine probabilité de non alignement des perforations successives des membranes et donc de conservation de l'étanchéité, cette probabilité étant maximale si l'angle formé entre la trajectoire du projectile et les membranes est proche de 0°. En d'autres termes, cette probabilité décroît avec l'angle d'incidence du projectile.

Dans un mode de réalisation, les billes peuvent être traitées avec des lubrifiants. Les billes peuvent être enrobées dans des empâtages composés de bisulfure de molybdène, de graphite, de silicone, ou de talc selon l'application envisagée. On peut également réaliser un enrobage des billes avec des produits spécifiques élaborés comme un revêtement à base de polytétrafluoroéthylène ou équivalent. La mise en oeuvre de billes à base de polyimide contenant au moins en partie du graphite et du polytétrafluoroéthylène tel que le Torlon 4275 peut permettre une diminution notable du besoin en lubrifiants, voire leur suppression.

La présente invention sera mieux comprise à l'étude de la description détaillée de quelques modes de réalisation pris à titre d'exemples nullement limitatifs et illustrés par les dessins annexés, sur lesquels :

- la figure 1 est une vue en coupe méridienne d'une enceinte pneumatique ;
- la figure 2 est une demi-vue en coupe méridienne d'une enceinte pneumatique ;
- la figure 3 est une vue partielle en coupe transversale d'un boudin de bateau pneumatique ; et

- la figure 4 est une vue partielle en coupe transversale d'un réservoir souple.

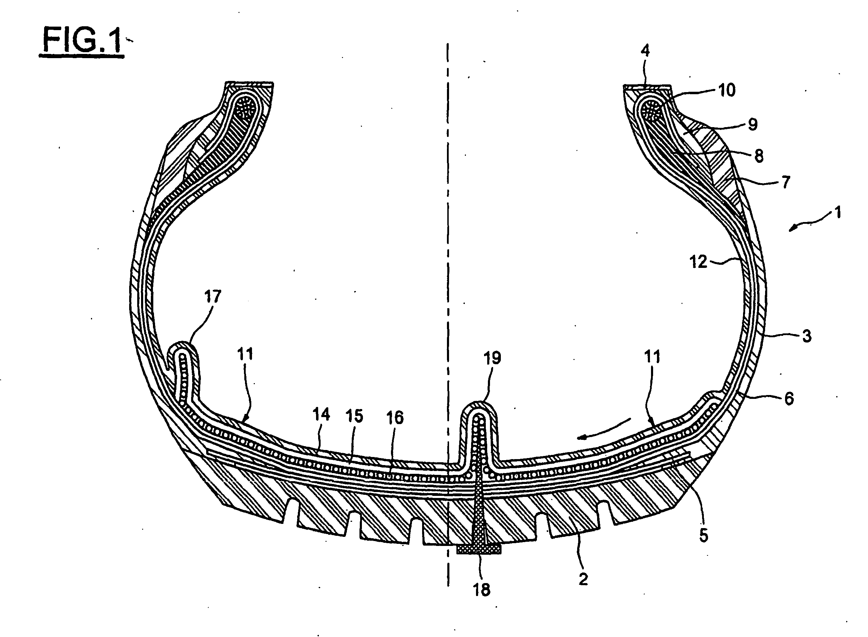

Dans le mode de réalisation illustré sur la figure 1. le pneumatique 1 est destiné à un véhicule, par exemple une voiture particulière, et a été représenté à l'état normal dans la moitié gauche de la figure et après une tentative de perforation dans la moitié droite de la figure. Le pneumatique 1 comprend une bande de roulement 2 destinée à être en contact avec le sol, des flancs 3 et des talons 4, les flancs 3 et les talons 4 étant symétriques par rapport à un plan radial.

En outre, sont prévues au moins une nappe de ceinture 5 disposée sur une face interne de la bande de roulement 2 et une nappe de carcasse 6 s'étendant sur une face interne de la nappe de ceinture 5, des flancs 3 et venant jusque dans le talon 4 pour y faire une boucle restant ouverte. La nappe de ceinture 5 est de forme circulaire. La nappe de carcasse 6 est de forme radiale et s'étend d'un talon 4 à l'autre talon 4 avec des extrémités repliées dans chaque talon 4. Une couche de renfort 7 est disposée entre le flanc 3 et le talon 4. Une couche de remplissage 8 est disposée dans le repli de la nappe de carcasse 6. Une couche 9 vient former le talon en entourant la nappe de carcasse 6. Dans la boucle restée ouverte formée par l'extrémité de la nappe de carcasse 6, est disposé un faisceau de câbles 10, par exemple métalliques, également appelé tringle, donnant une forte rigidité au talon 4.

Le pneumatique 1 comprend en outre un système anti-perforation 11 comprenant une couche élastique 12 fixée sur la face interne du flanc 3 et pouvant être située dans le prolongement de la couche 9 du talon 4, une couche élastique 14 qui peut être faite dans le même matériau que la couche élastique 12, par exemple un élastomère, formant la face interne dudit système anti-perforation 11 sensiblement au droit de la bande de roulement 2. Le système anti-perforation 11 se complète par une armature anti-perforation 15 et une couche de billes 16. La couche de billes 16 est en contact avec la face interne de l'enveloppe pneumatique, par exemple sous la forme d'une couche d'étanchéité non visible en raison de sa faible épaisseur.

L'armature anti-perforation 15 est disposée entre la couche élastique 14 et la couche de billes 16. L'armature anti-perforation 15 et la couche élastique 14 sont fixées fortement et intimement l'une à l'autre en vue d'obtenir une excellente cohésion. Les billes sont libres entre la face interne de l'enveloppe pneumatique et l'armature anti-perforation 15. Les couches 14 et 15 sont libres par rapport à l'enveloppe, sensiblement au niveau de la bande de roulement 2. De plus, une surlongueur des couches 14, 15 et 16 est prévue pour former un pli 17 sensiblement au niveau de la jonction entre la bande de roulement 2 et le flanc 3, par exemple à proximité de la couche élastique 12. Le pli 17 forme ainsi une réserve de longueur des couches 14 à 16 et permet aux dites couches 14 à 16 de se déplacer comme illustré dans la partie droite de la figure.

Un clou 18 est venu se ficher dans la bande de roulement 2 et a traversé les nappes de ceinture 5 et la nappe de carcasse 6. Toutefois, le clou 18 n'a pu perforer le système anti-perforation 11 qui a épousé la forme dudit clou 18 en se déplaçant latéralement dans le sens de la flèche pour venir former une protubérance 19 autour de l'extrémité du clou 18. La couche de billes 16 facilite le déplacement qui provoque un dépliage et donc une suppression du pli 17. En d'autres termes, la surlongueur des couches 14 à 16 s'est déplacée le long de la face interne de l'enveloppe dans le sens latéral pour venir épouser la forme du clou 18 et ce sans perforation. L'armature anti-perforation 15 est capable de résister à une force relativement élevée appliquée sur une faible surface et la couche élastique 14 assure l'étanchéité entre l'intérieur du pneumatique 1 qui sera généralement gonflé à une pression nettement supérieure à la pression atmosphérique.

On offre ainsi une capacité de résistance à la crevaison extrêmement élevée. Les couches 14 et 15, fortement liées ensemble tout en étant libres par rapport à l'intérieur de l'enveloppe sensiblement au droit de la bande de roulement 2, sont capables de résister à des perforations d'un type auquel des couches de composition identique mais fixées à la face interne de la bande de roulement auraient été incapables de résister.

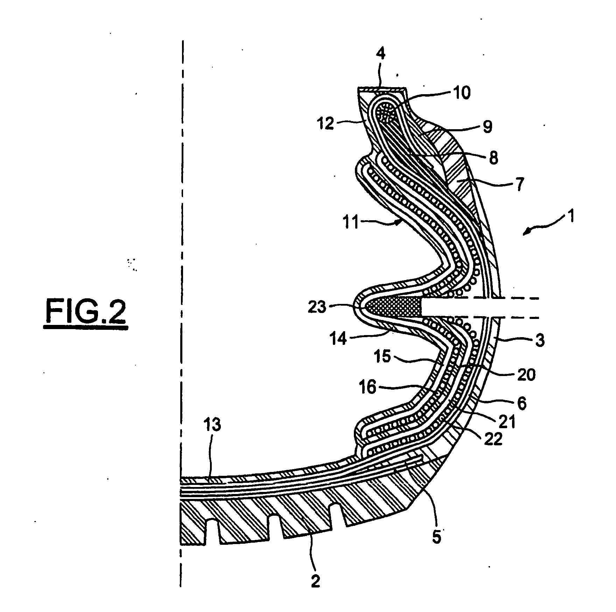

Dans le mode de réalisation illustré sur la figure 2, le pneumatique 1 est du type prévu pour les engins militaires ou agricoles dont les flancs sont particulièrement exposés à la perforation par des projectiles, des pierres ou des bois coupants. L'enveloppe du pneumatique 1 présente une structure identique à celle du mode de réalisation précédent. Le système anti-perforation 11 diffère du précédent en ce qu'il comprend une couche 12 de matériau élastique fixée au talon 4, une couche 13 de matériau élastique fixée à la face interne des couches de renfort 5, sensiblement au droit de la bande de roulement 2 et des couches 14 à 16 de même structure que dans le mode de réalisation précédent mais disposées sur la face interne du flanc 3.

Les couches 14 à 16 sont complétées par une couche supplémentaire 20 élastique pouvant être réalisée dans le même matériau que les couches élastiques 12, 13 et 14 disposées en contact avec la couche de billes 16 du côté opposé à l'armature anti-perforation 15, une armature anti-perforation supplémentaire 21 disposée du côté extérieur de la couche élastique 20 et une rangée supplémentaire de billes 22 disposées entre l'armature anti-perforation supplémentaire 21 et la face interne de l'enveloppe. On dispose ainsi de deux membranes d'étanchéité composées chacune d'une couche élastique et d'une armature anti-perforation, d'où un risque de perforation réduit.

Un projectile 23 a perforé le flanc 3, la couche anti-perforation supplémentaire 21 et la couche élastique supplémentaire 20 et provoque la déformation de la membrane d'étanchéité intérieure formée par la couche élastique 14 et l'armature anti-perforation 15. On bénéficie de la sorte d'une probabilité élevée d'arrêter un projectile ou un élément perforant avant qu'il ait traversé la membrane d'étanchéité intérieure. On peut bien entendu prévoir un nombre de membranes d'étanchéité plus élevé, par exemple trois ou quatre dans le cas des pneumatiques pour poids lourds ou agricoles et jusqu'à vingt à trente dans le cas des pneumatiques à usage militaire et ce d'autant plus que la vitesse de rotation des pneumatiques à usage militaire ou agricole est relativement faible.

Pour une bonne fixation des membranes d'étanchéité, on préfère réaliser les couches élastiques 12, 13, 14 et 20 en continuité les unes avec les autres et fortement liées. De même, une membrane d'étanchéité, intérieure ou extérieure, est pourvue de couches fortement liées entre elles, notamment la couche élastique 14 et l'armature anti-perforation 15.

Le pli 17 visible sur la figure 1 n'a pas été représenté sur la figure 2 dans la mesure où le pneumatique 1 est vu sous l'atteinte d'un projectile et donc après déformation. Avant déformation du système anti-perforation 11, la surlongueur des membranes d'étanchéité intérieure et extérieure peut être disposée à proximité du talon 4, ou au contraire à proximité de la bande de roulement 2.

A titre de variante, on pourrait également prévoir de remplacer l'une des deux rangées de billes 16 ou 22 par une couche de lubrifiant sec ou liquide. On peut également munir un pneumatique d'un système anti-perforation du type illustré sur la figure 1 et d'un système anti-perforation du type illustré sur la figure 2 soit en prévoyant une fixation relativement ponctuelle à la lisière entre la bande de roulement 2 et le flanc 3, soit en prévoyant une fixation du système anti-perforation sur le talon 4 comme illustré sur la figure 2.

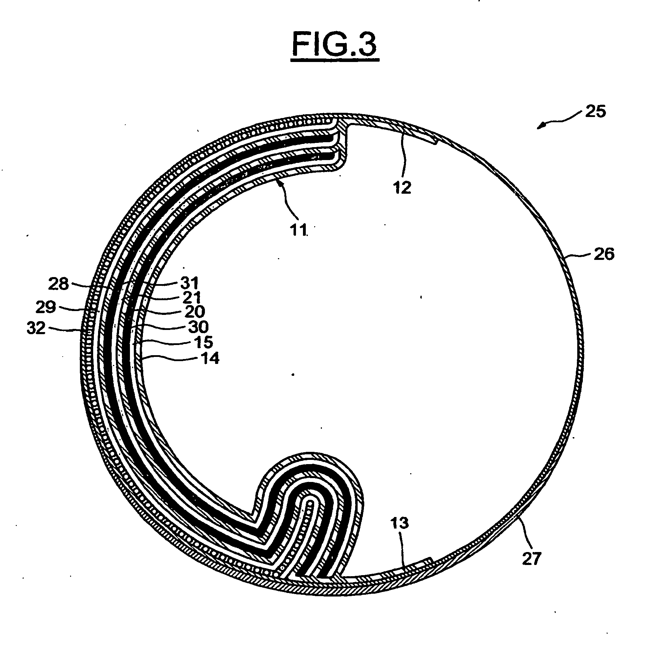

Dans le mode de réalisation illustré sur la figure 3, un boudin 25 de bateau pneumatique comprend une enveloppe circulaire 26, un renfort inférieur 27 destiné à prévenir une usure excessive lors des manipulations à terre et pouvant être réalisé en matériau synthétique, de type élastomère ou encore de type plastique, et un système anti-perforation 11 prévu pour être disposé sur le flanc du boudin 26 exposé à l'extérieur et donc susceptible de perforation par des objets perforants ou coupants. La structure du système d'étanchéité 11 est similaire à celle illustrée sur la figure 2 avec une fixation du système anti-perforation 11 par des couches élastiques 12 et 13 respectivement au sommet et à la base de la face interne de l'enveloppe 26.

La couche anti-perforation 11 comprend ici trois membranes d'étanchéité composées de couches élastiques 14, 20 et 28 et d'armatures anti-perforation respectivement 15, 21 et 29 séparées par une couche de lubrifiant sec 30 et un revêtement de téflon 31 respectivement. Une couche de billes 32 est disposée entre l'armature anti-perforation 29 et la face interne de l'enveloppe 26 avec des billes réalisés en nylon, en vue d'une faible masse. On obtient ainsi une protection balistique extrêmement intéressante pour des bateaux pneumatiques et ce avec un accroissement de masse très faible.

En outre, le nombre élevé de membranes d'étanchéité, chacune composée d'au moins une couche élastique et d'au moins une armature anti-perforation permet d'accroître la probabilité d'un décalage entre les trous des différentes membranes dus à la perforation par un même objet perforant. Cette probabilité de décalage des trous est encore accrue par la différence des longueurs méridiennes des membranes d'étanchéité.

La longueur méridienne des membranes d'étanchéité peut être d'autant plus élevée que la membrane d'étanchéité est proche de l'intérieur de l'enveloppe. On confère ainsi une capacité de déformation des membranes d'étanchéité croissante en allant de l'extérieur vers l'intérieur. En d'autres termes, un projectile rencontre des membranes d'étanchéité de plus en plus capables de se déformer et par conséquent assurant une absorption échelonnée de l'énergie favorisant la dissipation d'énergie cinétique du projectile.

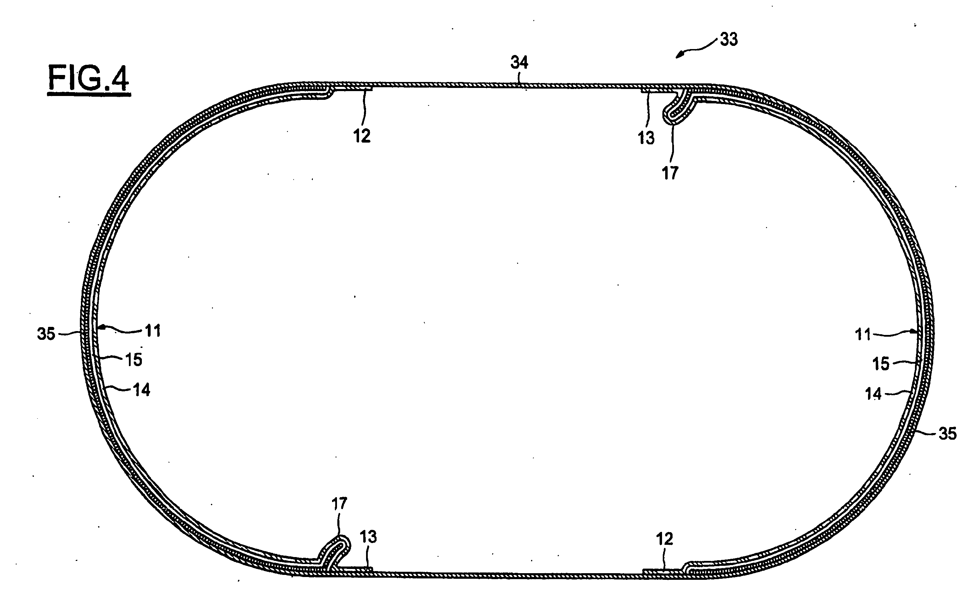

Sur la figure 4, est illustré un réservoir souple 33, par exemple prévu pour contenir du carburant. Le réservoir souple 33 comprend une enveloppe 34 à l'intérieur de laquelle ont été prévus un système anti-perforation 11 sur le bord dudit réservoir souple 33 en vue d'une protection contre les perforations provoquées par des projectiles ou des instruments coupants. Le système anti-perforation 11 comprend une membrane pourvue d'une couche élastique 14, de couches élastiques de fixation 12 et 13, d'une armature anti-perforation 15 et d'une couche de billes 35, par exemple réalisées en céramique. La couche de billes 35 offre des capacités de roulement excellentes de la membrane d'étanchéité par rapport à l'enveloppe 34, d'où une capacité élevée de déformation du système anti-perforation 11. Le système anti-perforation 11 peut également être prévu dans un réservoir en forme de rouleau.

Dans le cas d'un réservoir souple, l'armature anti-perforation 15 peut être particulièrement épaisse. On peut également prévoir une membrane d'étanchéité comprenant deux armatures anti-perforation séparées par une couche de matériau élastique. Le liquide contenu dans le réservoir souple 33 étant peu compressible, l'absorption de l'énergie due à un projectile est assurée par la membrane d'étanchéité et par la déformation globale du réservoir souple dont l'enveloppe 34 elle-même peut présenter une certaine élasticité. L'énergie cinétique d'un éventuel projectile peut donc se dissiper par le déplacement de la membrane d'étanchéité, par le déplacement du liquide et par le déplacement et la déformation de l'enveloppe 34. On accroît ainsi de façon considérable les capacités de résistance d'un réservoir souple à des objets coupants ou encore des projectiles.

## Revendications

1. Enceinte souple comprenant une bande de travail (2) et des flancs (3), définissant une enveloppe et une membrane d'étanchéité (11) tapissant au moins en partie l'enveloppe, la membrane d'étanchéité étant libre par rapport à la bande de travail et fixée aux extrémités opposées à la bande de travail, **caractérisée par le fait que** la membrane d'étanchéité (11) comprend un matériau élastique (14) et une armature anti-perforation (15), la longueur développée de la méridienne de la membrane d'étanchéité étant supérieure à celle de la méridienne de l'enveloppe.

2. Enceinte selon la revendication 1, dans laquelle la membrane d'étanchéité est fixée à au moins une partie des flancs (3).

3. Enceinte selon la revendication 1, comprenant des talons (4) délimitant les flancs (3), la membrane d'étanchéité (11) étant fixée à au moins une partie des talons.

4. Enceinte selon la revendication 1, dans laquelle la membrane d'étanchéité (11) est libre par rapport à au moins un flanc.

5. Enceinte selon l'une quelconque des revendications précédentes, comprenant au moins une membrane d'étanchéité supplémentaire tapissant au moins en partie l'intérieur de la première membrane d'étanchéité, la membrane d'étanchéité supplémentaire comprenant un matériau élastique (20) et une armature anti-perforation (21), la membrane d'étanchéité supplémentaire étant au moins en partie libre par rapport à la première membrane d'étanchéité et fixée aux extrémités opposées à la bande de travail.

6. Enceinte selon l'une quelconque des revendications précédentes, comprenant une pluralité de billes (16) disposées en lit entre la bande de travail et la membrane d'étanchéité.

7. Enceinte selon la revendication 6, dans laquelle les billes sont lubrifiées.

8. Enceinte selon l'une quelconque des revendications précédentes, dans laquelle la membrane d'étanchéité comprend un élastomère, de préférence de l'halobutyl et/ou des matériaux de type polyuréthane.

9. Enceinte selon l'une quelconque des revendications précédentes, dans laquelle la membrane d'étanchéité comprend au moins un matériau d'adhésion de l'armature anti-perforation sur le matériau élastique.

10. Enceinte selon l'une quelconque des revendications précédentes, dans laquelle le matériau élastique (14) couvre au moins une des faces de l'armature anti-perforation (15).

11. Enceinte selon l'une quelconque des revendications précédentes, dans laquelle la membrane d'étanchéité est capable de se déplacer à l'intérieur de l'enceinte souple en épousant au moins en partie la forme du corps étranger ayant perforé l'enveloppe réduisant ainsi le risque de perforation complète de l'enceinte souple.

12. Enceinte selon l'une quelconque des revendications précédentes, dans laquelle l'enceinte comprend plusieurs membranes d'étanchéité successives tapissant chacune d'elles au moins en partie l'intérieur de la membrane d'étanchéité précédente comprenant chacune un matériau élastique et une armature anti-perforation, et étant au moins en partie libre par rapport à la membrane d'étanchéité précédente et ayant chacune d'elles une longueur développée de leur méridienne progressivement supérieure à celle de la membrane d'étanchéité précédente et étant fixée aux extrémités opposées à la bande de travail.

13. Enceinte selon l'une quelconque des revendications précédentes, dans laquelle les membranes d'étanchéité successives comprennent une pluralité de billes et/ou un lubrifiant entre chacune d'elles afin de faciliter leur déplacement les unes par rapport aux autres sous une force de pression.

14. Enceinte pneumatique selon l'une quelconque des revendications précédentes.

15. Réservoir comprenant une enceinte selon l'une quelconque des revendications 1 à 13.

16. Bateau pneumatique comprenant une enceinte selon l'une quelconque des revendications 1 à 13.

## Claims

1. Flexible casing comprising a working strip(2) and sidewalls (3), defining an envelope and a sealing membrane (11) which lines at least part of the envelope, the sealing membrane being free relative to the working strip and being attached to the ends opposite to the working strip, **characterized in that** the sealing membrane (11) comprises an elastic material (14) and a perforation-resistant reinforcement (15), the developed length of the meridian of the sealing membrane being greater than that of the meridian of the envelope.

2. Casing according to Claim 1, in which the sealing membrane is attached to at least part of the sidewalls (3).

3. Casing according to Claim 1, comprising beads (4) bounding the sidewalls (3), the sealing membrane (11) being attached to at least part of the beads.

4. Casing according to Claim 1, in which the sealing membrane (11) is not attached to at least one sidewall.

5. Casing according to any of the preceding claims, comprising at least one additional sealing membrane which, at least partially, lines the inside of the first sealing membrane, the additional sealing membrane comprising an elastic material (20) and a perforation-resistant reinforcement (21), and the additional sealing membrane being free, at least partially, relative to the first sealing membrane and being attached to the ends opposite to the working strip.

6. Casing according to any of the preceding claims, comprising a plurality of balls (16) arranged in a bed between the working strip and the sealing membrane.

7. Casing according to Claim 6, in which the balls are lubricated.

8. Casing according to any of the preceding claims, in which the sealing membrane comprises an elastomer, preferably halobutyl and/or a polyurethane material.

9. Casing according to any of the preceding claims, in which the sealing membrane comprises at least one material for bonding the perforation-resistant reinforcement to the elastic material.

10. Casing according to any of the preceding claims, in which the elastic material (14) covers at least one of the faces of the perforation-resistant reinforcement (15).

11. Casing according to any of the preceding claims, in which the sealing membrane (11) can move along the inside of the flexible casing taking on, at least partially, the shape of the foreign body having perforated the envelope thus diminishing the risk of the complete perforation of the flexible casing.

12. Casing according to any of the preceding claims, in which the casing comprises several successive sealing membranes, each of them lining, at least partially, the inside of the previous sealing membrane, each comprising an elastic material and a perforation-resistant reinforcement and being free, at least partially, relative to the previous sealing membrane and each of them having a developed length of its meridian progressively greater than that of the previous sealing membrane and being attached to the ends opposite to the working strip.

13. Casing according to any of the preceding claims, in which the successive sealing membranes comprise a plurality of balls and/or a lubricant between each of them to facilitate their mutual movement under the force of a pressure.

14. Pneumatic tyre according to any of the preceding claims.

15. Tank comprising an envelope according to any of 1 to 13 claims.

16. Pneumatic boat comprising an envelope according to any of 1 to 13 claims.

**Patentansprüche**

1. Biegsame Hülle mit einem Arbeitsbereich (2) und Seitenwänden (3), die eine Verschalung bilden und einer Dichtungsmembran (11), die die Verschalung mindestens zum Teil bedeckt, wobei die Dichtungsmembran im Vergleich zum Arbeitsbereich frei ist und an den Enden gegenüber dem Arbeitsbereich befestigt ist, und sich **dadurch** auszeichnet, dass die Dichtungsmembran (11) mit einem elastischen Material (14) und einer durchstoßfesten Verstärkung (15) ausgestattet ist, wobei die Abwickellänge des Längenkreises der Dichtungsmembran die Länge des Längenkreises der Verschalung übersteigt.

2. Hülle gemäß Anspruch 1, bei der die Dichtungsmembran mindestens teilweise an den Seitenwänden (3) befestigt ist.

3. Hülle gemäß Anspruch 1 mit Wülsten (4), die die Seitenwände begrenzen (3), wobei die Dichtungsmembran (11) mindestens teilweise an den Wülsten befestigt ist.

4. Hülle gemäß Anspruch 1, bei der die Dichtungsmembran (11) im Verhältnis zu mindestens einer Seitenwand frei ist.

5. Hülle gemäß einem der oben genannten Ansprüche, die mit mindestens einer zusätzlichen Dichtungsmembran ausgestattet ist, die mindestens teilweise die erste Dichtungsmembran abdeckt, wobei die zusätzliche Dichtungsmembran mit einem elastischen Material (20) und einer durchstoßfesten Verstärkung (21) ausgestattet ist, wobei die zusätzliche Dichtungsmembran mindestens zum Teil frei gegenüber der ersten Dichtungsmembran ist und an den Enden gegenüber dem Arbeitsbereich befestigt ist.

**6.** Hülle gemäß einem der oben genannten Ansprüche, die mit einer Vielzahl von Kügelchen (16) versehen ist, die zwischen dem Arbeitsbereich und der Dichtungsmembran eingebettet sind.

**7.** Hülle gemäß Anspruch 6, in der die Kügelchen eingeschmiert sind.

**8.** Hülle gemäß einem der oben genannten Ansprüche, in der die Dichtungsmembran mit einem Elastomer, vorzugsweise Halobutyl und/oder ein Polyurethan-Bereich Material, ausgestattet ist.

**9.** Hülle gemäß einem der oben genannten Ansprüche, in der die Dichtungsmembran mindestens ein Material zum Anhaften der durchstoßfesten Verstärkung an dem elastischen Material enthält.

**10.** Hülle gemäß einem der oben genannten Ansprüche, bei der das elastische Material (14) mindestens eine der Seiten der durchstoßfesten Verstärkung (15) bedeckt.

**11.** Hülle gemäß einem der oben genannten Ansprüche, bei der die Dichtungsmembran sich innerhalb der biegsamen Hülle verschieben kann, indem sie mindestens teilweise die Form des Fremdkörpers annimmt, der die Verschalung durchdringt, wodurch das Risiko einer durchgehenden Perforation der biegsamen Hülle verringert wird.

**12.** Hülle gemäß einem der oben genannten Ansprüche, bei der die Hülle mehrere aufeinanderfolgende Dichtungsmembranen enthält, wobei jede von ihnen mindestens teilweise den Innenbereich der vorangegangenen Dichtungsmembran bedeckt und wobei jede mit einem elastischen Material und einer durchstoßfesten Verstärkung ausgestattet ist, die im Verhältnis zur vorangegangenen Dichtungsmembran mindestens zum Teil frei sind und wobei bei jeder von ihnen die Abwickellänge des Längenkreises größer ist als bei der vorangegangenen Dichtungsmembran und die an den Enden gegenüber des Arbeitsbereiches befestigt werden.

**13.** Hülle gemäß einem der oben genannten Ansprüche, bei der die aufeinanderfolgenden Dichtungsmembranen eine Vielzahl von Kügelchen und/oder ein Schmiermittel zwischen ihnen enthalten, um ihre Versetzung untereinander bei einer Druckeinwirkung zu erleichtern.

**14.** Luftreifen gemäß einem der oben genannten Ansprüche.

**15.** Behälter mit einer Hülle gemäß einem der Ansprüche 1 bis 13.

**16.** Schlauchboot mit einer Hülle gemäß einem der Ansprüche 1 bis 13.

EP 2 064 074 B1

FIG.1

11

FIG.2

# FIG.3

FIG.4

EP 2 064 074 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0218158 A
- US 5785779 A
- EP 1174290 A